# EUROPÄISCHE PATENTSCHRIFT

(11) **EP 2 748 005 B1**
(45) Veröffentlichungstag und Bekanntmachung des Hinweises auf die Patenterteilung: **14.10.2015**
(21) Anmeldenummer: 12748225.5
(22) Anmeldetag: 17.08.2012
(51) Int. Cl.: B41F 33/00, B41F 33/02, G01N 21/88, G01N 21/898

(54) **MASCHINE UND VERFAHREN ZUM BEDRUCKEN VON MATERIALBAHNEN**
MACHINE AND METHOD FOR PRINTING WEBS OF MATERIAL
MACHINE ET PROCÉDÉ D'IMPRESSION DE BANDES DE MATÉRIAU

(30) Priorität: 22.08.2011 DE 102011110800; 03.04.2012 DE 102012205482
(43) Veröffentlichungstag der Anmeldung: 02.07.2014
(73) Patentinhaber: Windmöller & Hölscher KG, 49525 Lengerich (DE)
(72) Erfinder: WEIDMANN, Björn, 49078 Osnabrück (DE)
(86) Internationale Anmeldenummer: PCT/EP2012/066085
(87) Internationale Veröffentlichungsnummer: WO 2013/026792

(56) Entgegenhaltungen:
- DE-A1- 4 321 177
- DE-A1- 19 613 084
- DE-A1-102007 025 910
- DE-B3-102004 007 374

## Beschreibung

Die Erfindung betrifft eine Maschine und ein Verfahren zum Bedrucken von Matedalbahnen nach den Obarbegriffen der Ansprüche 1 und 18.

Bedruckstoffe werden untersucht, um die Druckergebnisse zu kontrollieren. In der Regel wird zu diesem Zweck ein fertiges Druckerzeugnis entnommen und unter anderem auf seinen optischen Eindruck untersucht. In jüngerer Zeit werden bedruckte Materialbahnen verstärkt Inline mit Sensoren wie Kameras beobachtet, um das Ergebnis des Druckprozesses kontinuierlich zu überwachen und schneller zu einem Ergebnis zu kommen. Die DE 432 11 77-A1 zeigt eine Maschine zum Bedrucken von Materialbahnen mit einer Beobachtungsstation gemäß der Oberbegriffe der Ansprüche 1 und 18. Auch die DE 10 2004 007 374 B3 zeigt eine Vorrichtung zur Inline-Bahnbeobachtung. In dieser Druckschrift wird die zu untersuchende Bahn im Bereich der Bahnbeobachtungsstation von einer Gegenlage geführt. Hierbei ist die Gegenlage auf der dem Sensor abgewandten Seite der Bahn positioniert. Die Gegenlage weist eine poröse oder durchlöcherte Oberfläche auf, durch die Luft gedrückt wird. Als Folge dieser Maßnahme bildet sich ein Luftpolster, auf dem die Bahn gleitet.

Die Erfahrung hat gezeigt, dass es bei den gezeigten Inline-Bahnbeobachtungsstationen zu Messfehlern kommt. Dies gilt insbesondere, wenn die Farbeindrücke transparenter oder telltransparenter Bedruckstoffe untersucht werden. Auch bestimmte opake Stoffe können in dieser Weise problematisch sein.

Daher besteht die Aufgabe der vorliegenden Erfindung darin, diese Messfehler zu reduzieren. Die Aufgabe wird durch die Ansprüche 1 und 18 gelöst. Demzufolge ist eine Druckdifferenz erzeugende Einrichtungen vorgesehen sind, welche derart eingerichtet sind, dass auf die Bahn eine resultierende Kraft in Richtung auf die Gegenlage wird, wobei eine erste Einrichtung, welche auf der dem Sensor zugewandte Seite der Bahn angeordnet ist, einen Überdruck hervorruft und/oder eine zweite Einrichtung, welche auf der dem Sensor abgewandten Seite der Bahn angeordnet ist, einen Unterduck hervorruft.

Im Vergleich zum Stand der Technik ist also gerade nicht vorgesehen, dass die Materialbahn berührungslos über die Gegenlage geführt wird. Vielmehr sind Einrichtungen vorgesehen, mit welchen die Materialbahn auf bzw. gegen die Gegenlage gedrückt wird. In einer ersten Möglichkeit der Erfindung wird Blasluft eingesetzt, um die Materialbahn auf beziehungsweise gegen die Gegenlage zu drücken. Eine vorteilhafte alternative oder ergänzende Möglichkeit, dies zu tun, besteht darin, die dem Sensor abgewandte Seite der Materialbahn mit Unterdruck zu beaufschlagen und so an die Gegenlage zu saugen.

Zu diesem Zweck müsste die Gegenlage mit dementsprechenden Sauglöchem oder Ähnlichem versehen werden. Saug- oder Unterdruckvorrichtungen müssten ebenfalls vorgesehen werden. Zu den Nachteilen des Unterdrucks gehört, dass ein Verlaufen der Bahn natürlich zu einer völligen Öffnung der Unterdruckdüsen gegen die Atmosphäre führt, was einen raschen Verlust des Unterdrucks nach sich ziehen kann. Des Weiteren würden auch Formatwechsel bei der Bahn (Bahnbreitenwechsel) eine Anpassung der Unterdruckdüsen notwendig machen (Unterdruckdüsen müssten bei einer schmäleren Bahn geschlossen werden und umgekehrt).

Sowohl die Verwendung von Unterdruck als auch die Verwendung von Blasluft führen zu einem Andruck der Bahn an die Gegenlage. Interessanterweise scheint die Bahn dem "Andruck" zunächst einen gewissen Widerstand entgegen zu setzen, der mit der Bahnlaufgeschwindigkeit steigt. Dieser Umstand dürfte mit der laminaren Luftströmung zu erklären sein, die von der Bahn bei ihrem Lauf mitgerissen wird. Ist dieser Widerstand erst einmal überwunden und unterschreitet die Bahn einen gewissen Abstand zur Gegenlage, so kommt der Bernoulli Effekt zwischen Bahn und Gegenlage zum Tragen und führt zu einem weiteren Anschmiegen zwischen Bahn und Gegenlage. Es ist möglich und In vielen Fällen vorteilhaft, den Abstand in den Bereich eines Millimeters oder noch darunter (<0,5 mm, <0,2 mm, eigentlich eher <0,1 mm oder <0,05 mm usw.) zu verringern.

Durch die Reduktion des Abstandes zwischen Bahn und Gegenlage wird die Qualität der Untersuchung des Bedruckstoffes verbessert. Dies gilt insbesondere für Messungen des Farbortes und ähnliches. Solche Messungen werden vorteilhafterweise mit spektralfotometrisch messenden Sensoren vorgenommen.

In einer weiteren, erfindungsgemäßen Variante der Erfindung ist eine zweite Einrichtung vorgesehen, welche auf der dem Sensor abgewandten Seite der Bahn angeordnet Ist. Mit dieser Einrichtung wird auf der besagten Seite der Bahn ein Unterdruck hervorgerufen.

Besonders vorteilhaft ist es, wenn die zweite Einrichtung ebenfalls eine Düsen umfassende Vorrichtung umfasst, mit welcher Blasluft bereitgestellt werden kann. Diese Blasluft weist vorteilhafterweise eine Strömungsgeschwindigkeit auf, die größer ist als die Transportgeschwindigkeit der Bahn. Mit dieser strömenden Blasluft kann gewissermaßen ein Luftzug erzeugt werden, mit welchem die Bahn unter Ausnutzung des Bemoulli-Effektes gegen die Gegenlage gezogen wird. Diese Variante hat besondere Vorteile gegenüber einer Ausführung mit Saugöffnungen, da wesentlich weniger Energie vonnöten ist. Bei Ausführungen mit Saugöffnungen wird häufig Falschluft angesaugt, also Umgebungsluft, so dass oft eine höhere Pumpleistung notwendig ist, als theoretisch vorhergesehen. Zudem baut sich der Unterdruck bei einer Variante mit Saugöffnungen sehr langsam auf. Dagegen wird die Materialbahn mit einer erfindungsgemäßen Ausführung sehr schnell gegen die Gegenlage gezogen.

In einer besonders effektiven Ausführungsform sind die Düsen in Richtungen quer zur Transportrichtung (Z) angeordnet, so dass sie Blasluft eine Strömungsrichtung einnimmt, die im wesentlichen quer zur Transportrichtung der Materialbahn verläuft. In diesem Fall wird ein besonders starker Effekt beobachtet, so dass die Bahn auch bei einer vergleichsweise geringen Strömungsgeschwindigkeit gegen die Gegenlage gezogen wird.

Um einen möglichst geradlinigen Lauf der Materialbahn zu ermöglichen, ist es von Vorteil, wenn die Düsen in in der Gegenlage verlaufenden Kanälen angeordnet sind, welche quer zur Transportrichtung der Materialbahn gerichtet sind. An den seitlichen Stirnseiten der Gegenlage sind diese Kanäle bevorzugt offen, so dass die strömende und unter Überdruck stehende Luft entweichen kann.

In weiterer Ausgestaltung dieser Erfindungsvariante sind die Düsen mittig in den Kanälen angeordnet, so dass sie in Richtung auf die Seite der Gegenlage gerichtete Strömungen hervorrufen. In diesem Fall werden alle Bereiche der Bahn, insbesondere die Randbereiche, gleichmäßig gegen die Gegenlage gezogen.

Insbesondere in diesem Zusammenhang bieten eine ebene und/oder eine weiße Oberfläche der Gegenlage Vorteile.

Da es zu Reibung zwischen Bahn und Gegenlage kommen kann ist es von Vorteil, wenn die Fläche der Gegenlage, die in Berührung mit der Bahn kommen kann nur einen Teil der Breite der Bahn besitzt. In diesem Fall ist es vorteilhaft, wenn die Gegenlage in dieser Richtung verfahrbar ist. Dies kann geschehen, indem die Gegenlage verfahrbar auf einem Schlitten auf einer Traverse angebracht wird.

Es ist vorteilhaft, in unmittelbarer Umgebung zum ersten Sensor und zur ersten Gegenlage zumindest einen zweiten Sensor vorzusehen. Mit diesem zumindest einen zweiten Sensor können auch andere Größen gemessen werden als mit dem ersten Sensor. Dies ist aus folgenden Gründen von großem Vorteil und führt zu einer weiteren Verbesserung auch der Qualität der Messungen mit dem zumindest einen ersten Sensor:

Der erste Sensor kann mit Hilfe des zweiten Sensors getriggert werden. Dies hat besondere Vorteile, wenn der zumindest eine erste Sensor ein spektralfotometrischer Sensor ist und der zumindest eine zweite Sensor ein bildgebender Sensor ist. Neben der Triggerung kann dann zum Beispiel auch eine Orientierung der ersten Sensoren in der x-x Ebene gehören. Der geringe Abstand zwischen den ersten und zweiten Sensoren verringert Ungenauigkeiten zum Beispiel durch eine sich verändernde Bahndehnung. Daher ist es vorteilhaft, wenn sich keine oder nur eine Leitwalze auf dem Bahnlaufweg zwischen den Messpunkten des zumindest einen ersten und des zumindest einen zweiten Sensors befinden.

Aufgrund der anderen Meßgrößen, die mit dem zumindest einen zweiten Sensor gemessen werden sollen, kann der gewünschte Abstand zwischen der Bahn und der zweiten Gegenlage auch völlig anders sein als der zwischen Bahn und erster Gegenlage. So können hier wieder Luftpolster und Walzen vorteilhaft zum Einsatz kommen.

Die einzelnen Figuren zeigen:
- Fig. 1: Eine Station zur Beobachtung einer Materialbahn nach dem Stand der Technik
- Fig. 2: Ein Station mit einem ersten Sensor und einer ersten Gegenlage
- Fig. 3: Eine zweite Station zur Beobachtung einer Materialbahn nach dem Stand der Technik
- Fig. 4: Eine Station mit einem zweiten Sensor und einer zweiten Gegenlage
- Fig. 5: Eine weitere Station mit einem zweiten Sensor und einer zweiten Gegenlage
- Fig. 6: Die Station aus Figur 5 in einem anderen Betriebsmodus
- Fig. 7: Eine Schnittdarstellung einer vorteilhaften zweiten Gegenlage
- Fig. 8: Eine Schnittdarstellung einer weiteren vorteilhaften zweiten Gegenlage
- Fig. 9: Eine Station mit einem ersten und zweiten Sensor und einer ersten und zweiten Gegenlage
- Fig. 10: Eine Station mit einer einen Unterdruck erzeugenden Einrichtung.
- Fig. 11: Eine weitere Station mit einer einen Unterdruck erzeugenden Einrichtung
- Fig. 12: Ansicht A-A der Figur 10
- Fig. 13: Eine Variante der Figur 12
- Fig. 14: Eine weitere Variante der Figur 12
- Fig. 15: Eine weitere Variante der Figur 12

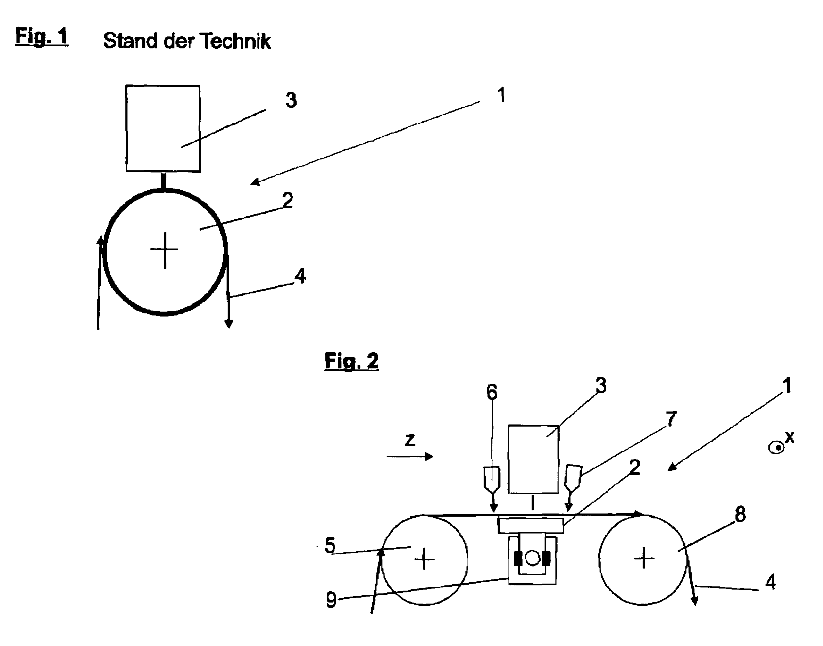

Fig. 1 zeigt eine Station 1 zur Beobachtung einer Materialbahn 4 nach dem Stand der Technik, bei der ein nicht transparentes Bahnmaterial auf einer schwarzen Gummiwalze, die als erste Gegenlage 2 dient, an einem ersten Sensor 3 vorbeigeführt wird. Bei transparenten Bahnrnaterialien müssten eigentlich weiße Walzen verwendet werden. Diese sind jedoch teuer, sie verschmutzen leicht und sind daher nicht praxistauglich. Figur 2 zeigt eine Station 1 zur Beobachtung einer Materialbahn 4 in einer erfindungsgemäßen Maschine. In dieser Station 1 läuft die Bahn erst über die mit einem nicht dargestellten Drehgeber versehene Geberwalze 5 in die Station 1 ein. Als nächstes gerät die Bahn in den Einfluss der Druckluftdüse 6, die Druckluft ausströmt, welche die Bahn 4 in Richtung auf die Gegenlage 2 drückt. Im Bereich dieser ersten Gegenlage 2 nimmt der erste Sensor 3 seine Messungen vor. Daher kann die Gegenlage auch als Messhintergrund bezeichnet werden. Hinter der Gegenlage 2 ist wieder ein Einwirkbereich einer Druckluftdüse nämlich der Druckluftdüse 7. Über die Leitwalze 7 verlässt die Bahn 4 diese Station 1. Die Gegenlage 2 kann kachelartig ausgeführt sein. Sie kann mit Hilfe einer Traverse 9 an die richtige Position in der x-Richtung der Bahn 4 (Breite) verfahren werden. Zudem ist der Austausch einer Kachel einfach und kostengünstig möglich. Eine automatische Verschmutzungsprüfung kann aufgrund der kleinen Fläche ebenfalls einfach und schnell erfolgen, da die Kachel aus dem Bereich des Bedrucksstoffs 4 gefahren und dort vermessen werden kann. Dies wäre mit einer Walze nicht möglich.

Bei der Vermessung von transmissiven bzw. transparenten Materialien spielt der Luftspalt zwischen Bedruckstoff und Messhintergrund für die Qualität des Messergebnisses eine entscheidende Rolle. Gleichzeitig soll ein permanenter Kontakt des Bedruckstoffs mit dem Hintergrund vermieden werden.

Aus diesem Grund sieht die Lösung vor, dass der Messhintergrund 2 knapp unter dem durch zwei Walzen 5, 8 geführten Bedruckstoff 4 liegt. Für die Messung wird dieser über Luftdruckdüsen 6, 7 gegen den Messhintergrund 2 geblasen. Die Düsen befinden sich in Bahnlaufrichtung z kurz vor und hinter dem Messhintergrund. Dadurch wird die mitgeführte Luft an den Messhintergrundkanten abgerakelt und der Luftspalt auf ein Minimum reduziert. Auf Grund des Bemoulli-Effekts saugt sich die Bahn bei zunehmender Geschwindigkeit immer besser an den Hintergrund an. Der Druck der Druckluft kann darüber hinaus an die Materialeigenschaften, Bahnspannung und Bahngeschwindigkeit angepasst werden. Nach Beendigung des Messvorgangs wird die Druckluft abgeschaltet, so dass sich die Bahn 4 wieder frei bewegt. Die Bahn 4 könnte auch über einen Unterdruck an den Messhintergrund 2 angesaugt werden. Diese Lösung führt jedoch bei Messungen am Bahnrand zu Problemen, da sich nur bedingt genügend Unterdruck zum Ansaugen der Bahn 4 bilden kann. Bei Verwendung von Druckluft spielt dies keine Rolle.

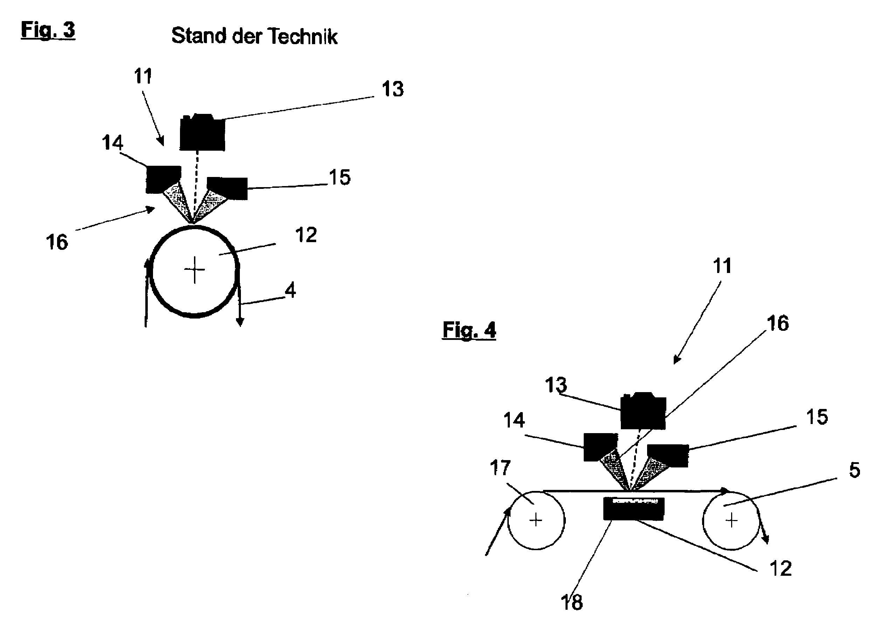

Figur 3 zeigt eine einfache zweite Station 11 zur Beobachtung einer Materialbahn, wie sie nach dem Stand der Technik teilweise für bildgebende Sensoren 13 eingesetzt wird. Der Bahnlauf ist wie in Figur 1. Als Messwalze wird hier eine Weiße Walze 12 (an die die Anforderungen nicht so hoch sind wie bei der Farbmessung) eingesetzt. Zu den Nachteilen eines solchen Verfahrens gehört, dass weiße Objekte auf transparenten Stoffen nicht erkannt werden können. Zu erwähnen sind die Hellfeld- 14 und die Dunkfeldbeleuchtung 15, deren Lichtkegel 16 ebenfalls dargestellt werden.

Figur 4 zeigt eine zweite Station 11, bei der die Führung der Bahn 4 von der Leitwalze 17 und der Geberwalze 5 übernommen werden. Die Gegenlage 12 oder hier besser der Messhintergrund berührt hier die Bahn 4 nicht. Diese Gegenlage ist jedoch mit einer Hintergrundbeleuchtung 18 ausgestattet, so dass die Kamera 13 hier auch den "weißen Adler auf weißem Grund" erkennen kann.

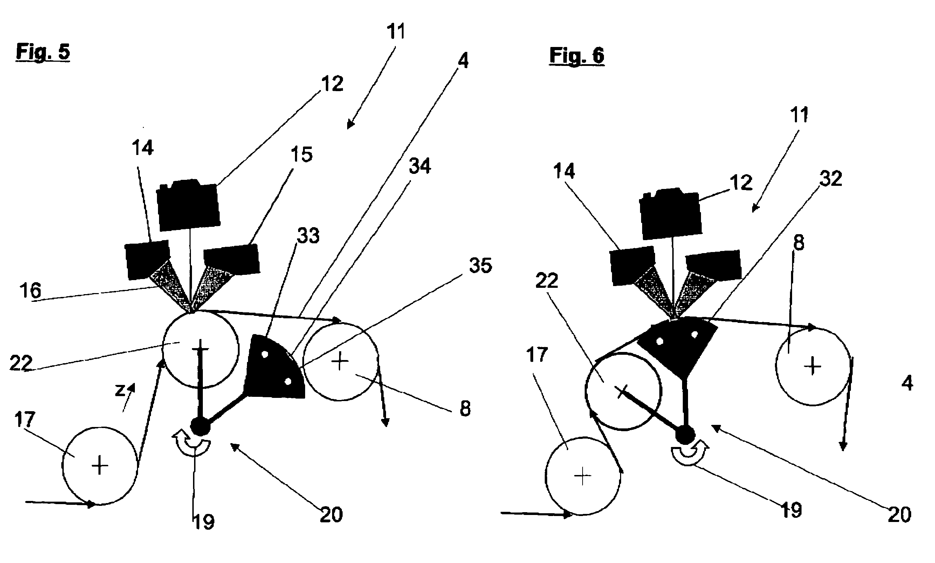

In den Figuren 5 und 6 wird eine weitere zweite Station 11 zur Beobachtung einer Materialbahn 4 dargestellt. Diese Station verfügt über ein Gegenlagensystem 20 mit zwei alternativen Gegenlagen 22 und 32. In Figur 5 dient eine weiße Walze 22 als Gegenlage beziehungsweise Messhintergrund. Durch den Pfeil 19 wird angedeutet, dass das System 20 im Rahmen einer Schwenkbewegung auch die Gegenlage 32 aktivieren kann, wie das in Figur 6 gezeigt ist. Hier dient die Walze 22 lediglich als Leitwalze, während die Gegenlage 32 die Bahn auf der dem Sensor gegenüberliegenden Seite führt.

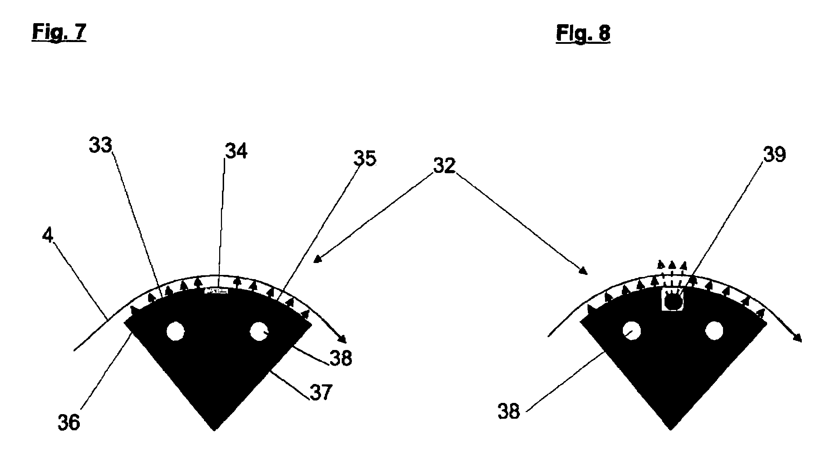

Die Figuren 7 und 8 zeigen zwei Ausführungsbeispiele für diese Gegenlage 32. Die der Bahn 4 zugewandte Oberfläche der Gegenlage 32 besitzt ein konvexes Profil. In der Bahnlaufrichtung z überstreicht die Bahn 4 zuerst die erste Oberfläche 33 der Gegenlage 32. Diese besteht aus einem porösen Material, vorzugsweise aus mikroporösem Teflon, das durch ein Sinterverfahren hergestellt werden kann. Dieses Material wird von einer Leitung 38 durchzogen, die Druckluft einbringt. Diese Druckluft durchströmt das poröse Material und tritt wie durch die Pfeile 36 dargestellt an der ersten Oberfläche 33 des porösen Materials aus. Hier bildet sich ein Luftpolster, das durch die Pfeile 36 dargestellt ist und auf dem die Bahn 4 schwimmt. In ihrer Transportrichtung z gelangt die Bahn dann in den Bereich des Spiegels 34, der eine Hintergrundbeleuchtung 18, 39 ersetzen kann. Die Maßnahme, einen Spiegel 34 als Messhintergrund zu verwenden, hat sich als derart vorteilhaft erwiesen, dass diese Maßnahme auch unabhängig von dem restlichen Aufbau der Messstation Vorteile bringt und möglicherweise schützenwert ist.

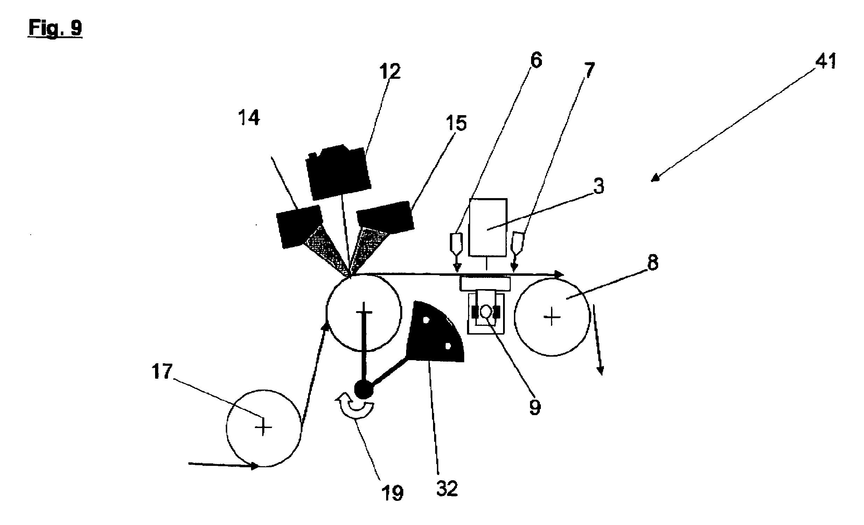

In der Transportrichtung z der Bahn ist dem Spiegel 34 die zweite Oberfläche 35 der Gegenlage 32 nachgelagert, die zu der ersten Oberfläche 33 der Gegenlage 32 spiegelbildlich aufgebaut ist Die Gegenlage 32 verfügt über ein druckfestes Gehäuse 37 auf den der Bahn 4 abgewandten Seiten, das ein Ausströmen der Druckluft verhindert. Die Gegenlage 32 in Figur 8 verfügt an Stelle des Spiegels 34 über eine Hintergrundbeleuchtung 39 und ist ansonsten genauso aufgebaut wie die Gegenlage 32 in Figur 7. Die Figur 9 zeigt eine Station 41, welche die Funktionskomponenten der Station 11 aus Figur 5 mit den Funktionskomponenten der Station 1 aus Figur 2 miteinander vereint.

Wie bereits erwähnt bringt diese Anordnung in einer Station weitere Vorteile für die Güte der Messung mit sich. Bei Mehrfarbendruckmaschinen ist es vorteilhaft, eine der gezeigten Stationen 1, 11, 41 nach dem letzten Druckwerk vorzusehen. Der Einsatz der Blasluftdüsen 6, 7 führt auch zu einer Reinigung der Bahn 4 und der optischen Elemente der Bahnbeobachtungsstation.

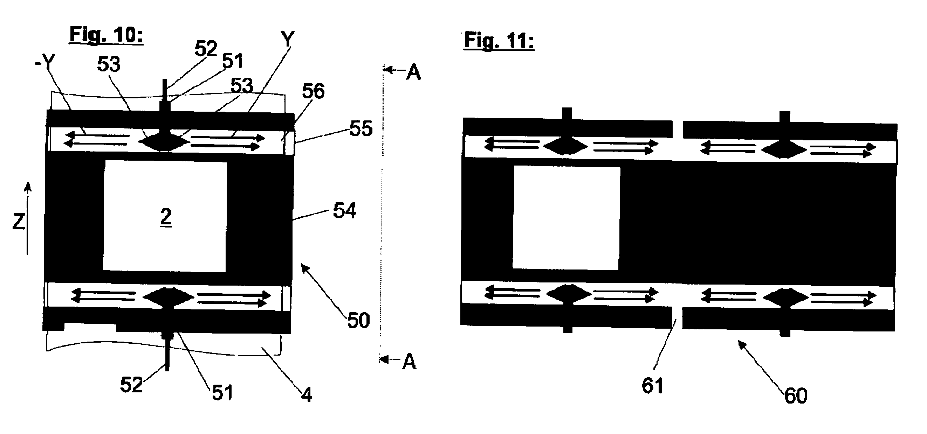

Die Figur 10 zeigt eine Variante einer Gegenlage, wie sie beispielsweise in Figur 10 mit dem Bezugszeichen 2 dargestellt ist. Die hier gezeigte Beobachtungsstation trägt das Bezugszeichen 50. Über diese Beobachtungsstation 50 wird in Transportrichtung Z die Materialbahn 4 geführt. Zu erkennen sind weiterhin als T- Stücke ausgeführte Rohrleitungen 51, mit welchen ein zugeführter, unter Überdruck stehender Luftstrom, der mit dem Pfeil 52 kenntlich gemacht ist, in zwei Teilströme aufgeteilt und dabei jeweils um 90° umgelenkt wird. Anstelle von T-Stücken können auch bereits beispielsweise zwei einzelne, lediglich umlenkende Rohre vorgesehen werden, die die bereits Teilluftströme eingespeist werden können. Weitere Varianten dürften dem Fachmann bekannt sein. Die Rohrleitungen münden in Düsen 53, aus welchen die Teilluftströme in Richtungen Y bzw. -Y austreten, wobei diese Richtungen quer zur Transportrichtung der Materialbahn 4 verlaufen.

Es ist zu beachten, dass vorteilhafterweise in Transportrichtung Z sowohl vor als auch nach dem Messhintergrund 2 eine beschriebene Düsenanordnung von Vorteil ist, damit die Bahn 4 auch möglich vollflächig auf dem Messhintergrund aufliegt beziehungsweise möglichst konstanten Abstand zu dieser hat, um keine verfälschten Messergebnisse zu erhalten.

Die Düsen 53 sind vorzugsweise mittig in Kanälen 56 angeordnet, welche an den Rändern 54 der Station 50 Öffnungen 55 aufweisen, so dass die strömende Luft ungehindert in die Umgebung entweichen kann, so dass ein stationäres Druckgefälle vorherrscht. Auf diese Weise stellen sich stationäre Messbedingungen ein, so dass Messungen, die zu unterschiedlichen Zeitpunkten durchgeführt wurden, miteinander vergleichbar sind.

Als besonderer Vorteil einer Station 50 ist zu nennen, dass es höchstens einen geringen Einfluss auf Messungen hat, wenn sich die Bahn in Richtung Y oder - Y, da die durch den Bernoulli-Effekt hervorgerufene Ansaugkraft in etwa konstant bleiben dürfte.

In der Figur 11 ist eine weitere Station 60 gezeigt, die sich im Wesentlichen aus zwei nebeneinander angeordneten Stationen 50 zusammensetzt, wie sie in der Figur 10 gezeigt ist. Eine wichtige Ergänzung ist jedoch, dass zwischen diesen beiden Teilstationen Öffnungen 61 vorgesehen werden müssen, so dass die Luft. die In Richtung der Grenzlinie zwischen den beiden Teilstationen geführt wird, auch ungehindert in die Umgebung entweichen kann. Die Elemente der Station 60, die eine Entsprechung In der Station 50 haben, sind nicht mit Bezugszeichen versehen worden. Zu beachten ist jedoch, dass die Station 60 zwei verschiedene Messhintergründe 2 umfasst, welche je nach Eigenschaften der Materialbahn (Beschaffenheit, Lichtdurchlässigkeit etc.) verwendet werden können, um Messungen durchzuführen. Dazu kann die Materialbahn 4 über den entsprechenden Teilabschnitt der Station 60 gelenkt werden. Passende Umlenkeinrichtungen können vorgesehen sein. Gleichwohl kann auch vorgesehen sein, die Station 60 mittels einer Verschiebeeinrichtung in Richtung Y oder -Y verschiebbar zu gestatten.

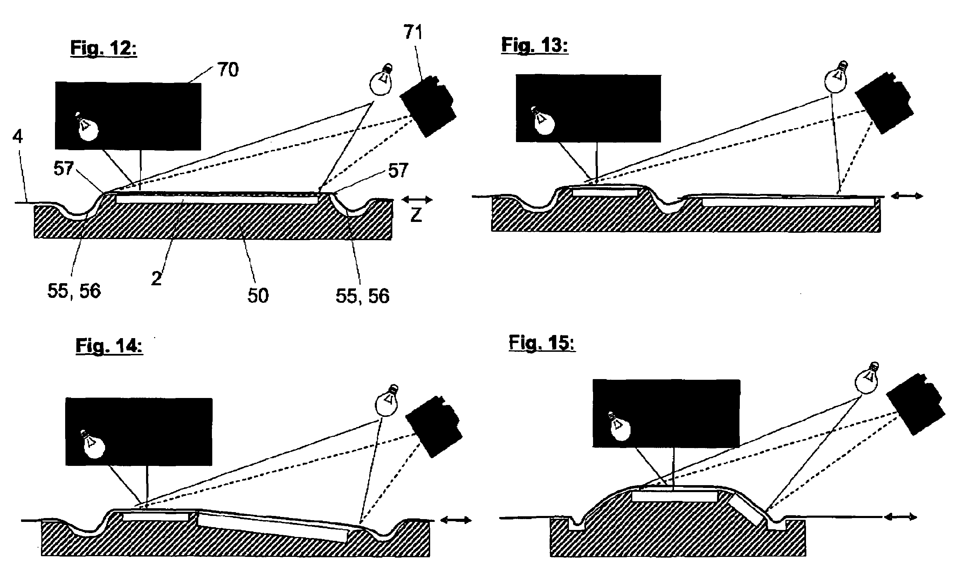

Die Figur 12 zeigt nun die Ansicht A-A aus der Figur 10. In diesem Beispiel ist der Messhintergrund 2 gegenüber dem gedachten geradlinigen Transportweg der Bahn 4 erhaben angeordnet, so dass letztere auch möglich plan auf dem Messhintergrund aufliegt. Die Kanten 57 können, wie dargestellt, angeschrägt sein. Deren Profil ist idealerweise dem erwarteten Bahnlaufweg angepasst, so dass die Bahn, die durchaus mit beträchtlicher Geschwindigkeit transportiert werden kann, keine Störungen erfährt. Bei hohen Transportgeschwindigkeiten könnten sonst die Kanten 57 dazu führen, dass die Bahn oberhalb des Messhintergrundes stehende Wellen ausbildet, so dass keine zuverlässigen Messungen mehr möglich sind.

Der Messhintergrund 2 dient im Ausführungsbeispiel gemäß Figur 12 sowohl der Messung mit einem Spektralphotometer 70 als auch der Messung mit einem bildgebenden oder densitometrischen Sensor 71, beispielsweise einer Kamera.

Im Ausführungsbeispiel gemäß Figur 13 sind im Gegensatz zum dem Beispiel gemäß Figur 12 zwei Messhintergründe vorgesehen, für jedes Photometer beziehungsweise für jeden Sensor 70, 71 einer.

In den Ausführungsbeispielen gemäß den Figuren 14 und 15 sind weitere Anordnungen der Messhintergründe gezeigt. In der Figur 14 ist der separate Messhintergrund für den Sensor 71 In Transportrichtung z abfallen angeordnet, wobei das Ende das Niveau des geradlinigen gedachten Bahnverlaufs, der vorhanden wäre, wenn keine Station vorgesehen würde, unterschreitet.

In der Figur 15 ist die erhöhte Anordnung der Messhintergrund so gewählt, dass der abfallend angeordnete Messhintergrund für den Sensor 71 nicht mehr das Niveau der geradlinig verlaufenden Bahn unterschreitet. Alle Anordnungen können, je nach Eigenschaften der Materialbahn 4 Vorteile aufweisen.

In den Figuren 12 bis 15 werden jeweils gleiche Elemente nur jeweils in einer Figur mit Bezugszeichen kenntlich gemacht. Diese gelten jedoch auch für die weiteren Figuren.

In der vorliegenden Patentanmeldung sind zahlreiche Ausführungsbeispiele der Erfindung erläutert worden. Auch Kombinationen dieser Ausführungsbeispiele sind denkbar und auch ausdrücklich vorgesehen, auch wenn sie nicht explizit beschrieben sind. Sie gehören damit zum Offenbarungsgehalt dieser Patentanmeldung.

| **Bezugszeichenliste** | |
|---|---|
| 1 | Erste Station zur Beobachtung einer Materialbahn |
| 2 | Erste Gegenlage/Messhintergrund |
| 3 | Erster Sensor |
| 4 | Materialbahn/Bahn |
| 5 | Geberwalze |
| 6 | Erste Druckluftdüse |
| 7 | Zweite Druckluftdüse |
| 8 | Leitwalze |
| 9 | Traverse |
| 10 | |
| 11 | Zweite Station zur Beobachtung einer Materialbahn |
| 12 | Zweite Gegenlage/Messhintergnind |
| 13 | Zweiter Sensor |
| 14 | Hellfeldbeleuchtung |
| 15 | Dunkelfeldbeleuchtung |
| 16 | Lichtkegel |
| 17 | Leitwalze |
| 18 | Hintergrundbeleuchtung |
| 19 | Pfeil in Schwenkrichtung der Gegenlagen 32 und 22 |
| 20 | Gegenlagensystem |
| 21 | |
| 22 | weiße Walze |
| 23 | |
| 24 | |
| | |
| 30 | |
| 31 | |
| 32 | Gegenlage |
| 33 | Erste Oberfläche der Gegenlage 32 |
| 34 | Spiegel |
| 35 | Zweite Oberfläche der Gegenlage 32 |
| 36 | Pfeile (Luftaustritt aus der Gegenlage 32) |
| 37 | Druckfestes Gehäuse der Gegenlage 32 |
| 38 | Druckluftkanal/Leitung |
| 39 | Hintergrundbeleuchtung der Gegenlage 32 |
| 40 | |
| 41 | Station zur Beobachtung einer Materialbahn |
| 42 | |
| 43 | |
| 50 | Beobachtungsstation |
| 51 | Als T-Stücke ausgeführte Rohrleitungen |
| 52 | Luftstrom |
| 53 | Düsen |
| 54 | Ränder |
| 55 | Öffnung |
| 57 | Kante |
| 60 | Station |
| 61 | Öffnung |
| 70 | Spektralphotometer |
| 71 | Densitometrischer Sensor |
| | |

## Patentansprüche

1. Maschine zum Bedrucken von Materialbahnen (4),
welche eine Station (1, 11, 41) zur Beobachtung der bedruckten Materialbahn (4) aufweist,
wobei die Station (1, 11, 41) zur Beobachtung der Materialbahn (4) einen Sensor (3, 13) zur Beobachtung der Bahn (4) und zumindest eine Gegenlage (2, 12) zur Führung der Bahn (4) aufweist, wobei sich die zumindest eine Gegenlage (2, 12) auf der dem Sensor (3, 13) abgewandten Seite der Bahn (4) befindet, wobei Einrichtungen vorgesehen sind, mit welchen eine Druckdifferenz erzeugbar ist und welche derart eingerichtet sind, dass auf die Bahn eine resultierende Kraft in Richtung auf die Gegenlage wirkt,
**dadurch gekennzeichnet, dass**
eine erste Einrichtung, welche auf der dem Sensor zugewandte Seite der Bahn angeordnet ist, einen Überdruck hervorruft, wobei diese Einrichtung Druckluftdüsen (6, 7) umfasst, von denen eine erste Druckluftdüse (6) vor der Gegenlage (2, 12) auf die Bahn (4) einwirkt und eine zweite Druckluftdüse (7) hinter der Gegenlage (2, 12) auf die Bahn (4) einwirkt,
und/oder eine zweite Einrichtung, welche auf der dem Sensor abgewandten Seite der Bahn angeordnet ist, einen Unterduck hervorruft, wobei diese zweite Einrichtung Düsen (53) umfasst, aus welchen unter Überdruck stehende und quer zur Transportrichtung (z) der Bahn (4) gerichtete Luftströme herausleitbar sind, wobei die Düsen (53) in Transportrichtung der Bahn (4) gesehen vor und hinter der Gegenlage (2, 12) angeordnet sind.

2. Maschine nach Anspruch 1,
**dadurch gekennzeichnet, dass**
die erste Einrichtung eine Vorrichtung zur Bereitstellung von Blasluft ist, welche Düsen (6, 7) aufweist, die im Bereich der Station (1, 11, 41) zur Beobachtung der Materialbahn (4) Blasluft auf die dem Sensor (3, 13) zugewandte Seite der Materialbahn (4) extrudieren.

3. Maschine nach einem der vorstehenden Ansprüche
**dadurch gekennzeichnet, dass**
die zweite Einrichtung ebenfalls eine Düsen umfassende Vorrichtung zur Bereitstellung von Blasluft umfasst, wobei die bereitgestellte Blasluft eine Strömungsgeschwindigkeit aufweist, die größer ist als die Transportgeschwindigkeit der Bahn (4).

4. Maschine nach dem vorstehenden Anspruch,
**dadurch gekennzeichnet, dass**
die Düsen in Richtungen quer zur Transportrichtung (z) angeordnet sind, so dass die Blasluft eine Strömungsrichtung einnimmt, die im Wesentlichen quer zur Transportrichtung der Bahn verläuft.

5. Maschine nach dem vorstehenden Anspruch,
**dadurch gekennzeichnet, dass**
die Düsen in Kanälen angeordnet sind, welche quer zur Transportrichtung der Bahn in der Gegenlage angeordnet sind.

6. Maschine nach dem vorstehenden Anspruch,
**dadurch gekennzeichnet, dass**
die Düsen mittig in den Kanälen angeordnet sind und in Richtung auf die Seiten der Gegenlage gerichtete Strömungen hervorrufen.

7. Maschine nach Anspruch 1,
**dadurch gekennzeichnet, dass**
die der Bahn (4) zugewandte Oberfläche der Gegenlage (2, 12) im Bereich der Station (1, 11, 41) eben ausgebildet ist.

8. Maschine nach einem der vorstehenden Ansprüche,
**dadurch gekennzeichnet, dass**
die der Bahn zugewandte Oberfläche der Gegenlage im Bereich der Station (1, 11,41) weiß ist.

9. Maschine nach einem der vorstehenden Ansprüche,
**dadurch gekennzeichnet, dass**
die der Bahn (4) zugewandte Oberfläche der Gegenlage (2, 12, 32) im Bereich der Station (1, 11, 41) aus einem glatten homogenen Material besteht.

10. Maschine nach einem der vorstehenden Ansprüche,
**dadurch gekennzeichnet, dass**
die der Bahn zugewandte Oberfläche der Gegenlage (2, 12, 32) im Bereich der Station (1, 11, 41) Teflon enthält.

11. Maschine nach einem der vorstehenden Ansprüche,
**dadurch gekennzeichnet, dass**
die der Bahn zugewandte Oberfläche der Gegenlage (2, 12, 32) im Bereich der Station (1,11,41) mikroporöse Teflon enthält.

12. Maschine nach einem der vorstehenden Ansprüche,
**dadurch gekennzeichnet, dass**
der Sensor (3,13) ein spektraler Sensor ist.

13. Maschine nach einem der vorstehenden Ansprüche,
**gekennzeichnet durch**
eine Verfahrvorrichtung, **durch** die der Bahn zugewandte Oberfläche der Gegenlage (2, 12, 32) im Bereich der Station (1, 11, 41) quer (x) zu der Laufrichtung (z) der Bahn (4) verfahrbar Ist.

14. Maschine nach einem der vorstehenden Ansprüche,
**dadurch gekennzeichnet, dass**
- in der Station (1, 11, 41) zur Beobachtung der Materialbahn (4) zumindest ein zweiter Sensor (12) vorgesehen ist, mit dem die diesem zweiten Sensor (12) zugewandte Seite der Materialbahn (4) beobachtbar ist,
- dass gegenüber diesem Sensor (12) auf der dem zumindest einen zweiten Sensor (12) abgewandten Seite der Materialbahn (4) zumindest eine zweite Gegenlage (12, 32, 22) positionierbar ist
- und dass diese weitere Gegenlage eine weiße Walze (22) und/oder eine stillstehende Gegenlage (32) mit einem optischen Element - vorzugsweise einer Hintergrundbeleuchtung (39) oder einem Spiegel (34) - ausgestattet ist.

15. Maschine nach dem vorstehenden Anspruch,
**dadurch gekennzeichnet, dass**
die stillstehende Gegenlage (32) wahlweise gegen die Materialbahn (4) anstellbar und abstellbar ist.

16. Maschine nach dem vorstehenden Anspruch,
**dadurch gekennzeichnet, dass**
die der Materialbahn (4) zugewandte Oberfläche der stillstehenden Gegenlage (32) in der Bahnlaufrichtung (z) vor und/oder nach dem optischen Element (34, 39) aus einem porösen oder durchlöcherten Material besteht.

17. Maschine nach einem der drei vorstehenden Ansprüche,
**gekennzeichnet durch**
zumindest zwei Beleuchtungsvonichtungen (14, 15), **durch** welche der Beobachtungsbereich des zumindest einen zweiten Sensors (13) ausleuchtbar ist.

18. Verfahren zum Bedrucken von Materialbahnen,
bei welchem eine bedruckte Materialbahn (4) mit einem Sensor (3, 13) im Bereich einer Station (1, 11, 41) zur Beobachtung der Materialbahn (4) von ihrer ersten Seite beobachtet wird,
während die Bahn auf ihrer anderen Seite von zumindest einer Gegenlage (2, 12, 22, 32) geführt wird,
wobei mit Einrichtungen eine Druckdifferenz erzeugt wird, wobei auf die Bahn (4) eine resultierende Kraft in Richtung auf die Gegenlage wirkt,
**dadurch gekennzeichnet, dass**
mit einer ersten Einrichtung, welche auf der dem Sensor zugewandte Seite der Bahn angeordnet ist, einen Überdruck hervorgerufen wird, wobei diese Einrichtung Druckluftdüsen (6, 7) umfasst, von denen eine erste Druckluftdüse (6) vor der Gegenlage (2. 12) auf die Bahn (4) einwirkt und eine zweite Druckluftdüse (7) hinter der Gegenlage (2, 12) auf die Bahn (4) einwirkt,
und/oder mit einer zweiten Einrichtung, welche auf der dem Sensor abgewandten Seite der Bahn angeordnet ist, ein Unterduck hervorgerufen, wobei diese zweite Einrichtung Düsen (53) umfasst, aus welchen unter Überdruck stehende und quer zur Transportrichtung (z) der Bahn (4) gerichtete Luftströme herausgeleitet werden, wobei die Düsen (53) in Transportrichtung der Bahn (4) gesehen vor und hinter der Gegenlage (2, 12) angeordnet sind.

19. Verfahren nach dem vorstehenden Anspruch,
**dadurch gekennzeichnet, dass**
die Geschwindigkeit und/oder der Volumenstrom der Blasluft so eingestellt wird, dass kein messbarer Luftspalt zwischen der Gegenlage (2, 12, 22, 32) und der Materialbahn (4) besteht.

## Claims

1. Machine for printing material webs (4) which has a station (1, 11, 41) for monitoring the printed material web (4), the station (1, 11, 41) for monitoring the material web (4) having a sensor (3, 13) for monitoring the web (4) and at least one support (2, 12) for guiding the web (4), the at least one support (2, 12) being situated on that side of the web (4) which faces away from the sensor (3, 13), devices being provided, by way of which a pressure difference can be generated and which are set up in such a way that a resulting force acts on the web in the direction of the support, **characterized in that** a first device which is arranged on that side of the web which faces the sensor causes a positive pressure, the said device comprising compressed air nozzles (6, 7), of which a first compressed air nozzle (6) in front of the support (2, 12) acts on the web (4) and a second compressed air nozzle (7) behind the support (2, 12) acts on the web (4), and/or **in that** a second device which is arranged on that side of the web which faces away from the sensor causes a negative pressure, the said second device comprising nozzles (53), from which air flows which are under positive pressure and are directed transversely with respect to the transport direction (z) of the web (4) can be guided, the nozzles (53) being arranged in front and behind the support (2, 12) as viewed in the transport direction of the web (4).

2. Machine according to Claim 1, **characterized in that** the first device is an apparatus for providing blown air, which apparatus has nozzles (6, 7) which, in the region of the station (1, 11, 41) for monitoring the material web (4), emit blown air onto that side of the material web (4) which faces the sensor (3, 13).

3. Machine according to either of the preceding claims, **characterized in that** the second device likewise comprises an apparatus which comprises nozzles for providing blown air, the blown air which is provided having a flow speed which is greater than the transport speed of the web (4).

4. Machine according to the preceding claim, **characterized in that** the nozzles are arranged in directions transversely with respect to the transport direction (z), with the result that the blown air assumes a flow direction which runs substantially transversely with respect to the transport direction of the web.

5. Machine according to the preceding claim, **characterized in that** the nozzles are arranged in channels which are arranged in the support transversely with respect to the transport direction of the web.

6. Machine according to the preceding claim, **characterized in that** the nozzles are arranged centrally in the channels and cause flows which are directed in the direction of the sides of the support.

7. Machine according to Claim 1, **characterized in that** that surface of the support (2, 12) which faces the web (4) is of planar configuration in the region of the station (1, 11, 41).

8. Machine according to one of the preceding claims, **characterized in that** that surface of the support which faces the web is white in the region of the station (1, 11, 41).

9. Machine according to one of the preceding claims, **characterized in that** that surface of the support (2, 12, 32) which faces the web (4) consists of a smooth homogeneous material in the region of the station (1, 11, 41).

10. Machine according to one of the preceding claims, **characterized in that** that surface of the support (2, 12, 32) which faces the web comprises Teflon in the region of the station (1, 11, 41).

11. Machine according to one of the preceding claims, **characterized in that** that surface of the support (2, 12, 32) which faces the web comprises microporous Teflon in the region of the station (1, 11, 41).

12. Machine according to one of the preceding claims, **characterized in that** the sensor (3, 13) is a spectral sensor.

13. Machine according to one of the preceding claims, **characterized by** a moving apparatus, by way of which that surface of the support (2, 12, 32) which faces the web can be moved in the region of the station (1, 11, 41) transversely (x) with respect to the running direction (z) of the web (4).

14. Machine according to one of the preceding claims, **characterized in that**
- at least one second sensor (12) is provided in the station (1, 11, 41) for monitoring the material web (4), by way of which second sensor (12) that side of the material web (4) which faces the said second sensor (12) can be monitored,
- **in that** at least one second support (12, 32, 22) can be positioned opposite the said sensor (12) on that side of the material web (4) which faces away from the at least one second sensor (12),
- and **in that** the said further support, a white roller (22) and/or a stationary support (32), is equipped with an optical element, preferably a backlighting means (39) or a mirror (34).

15. Machine according to the preceding claim, **characterized in that** the stationary support (32) can optionally be set against and set away from the material web (4).

16. Machine according to the preceding claim, **characterized in that** that surface of the stationary support (32) which faces the material web (4) consists of a porous or perforated material upstream and/or downstream of the optical element (34, 39) in the web running direction (z).

17. Machine according to one of the three preceding claims, **characterized by** at least two illumination apparatuses (14, 15), by way of which the monitoring region of the at least one second sensor (13) can be illuminated.

18. Method for printing material webs, in which method a printed material web (4) is monitored from its first side by way of a sensor (3, 13) in the region of a station (1, 11, 41) for monitoring the material web (4), while the web is guided on its other side by at least one support (2, 12, 22, 32), a pressure difference being generated by way of devices, a resulting force acting on the web (4) in the direction of the support, **characterized in that** a positive pressure is caused by way of a first device which is arranged on that side of the web which faces the sensor, the said device comprising compressed air nozzles (6, 7), of which a first compressed air nozzle (6) in front of the support (2, 12) acts on the web (4) and a second compressed air nozzle (7) behind the support (2, 12) acts on the web (4), and/or a negative pressure being caused by way of a second device which is arranged on that side of the web which faces away from the sensor, the said second device comprising nozzles (53), from which air flows which are under positive pressure and are directed transversely with respect to the transport direction (z) of the web (4) can be guided, the nozzles (53) being arranged in front and behind the support (2, 12) as viewed in the transport direction of the web (4).

19. Method according to the preceding claim, **characterized in that** the speed and/or the volumetric flow of the blown air are/is set in such a way that there is no measurable air gap between the support (2, 12, 22, 32) and the material web (4).

## Revendications

1. Machine d'impression de bandes de matériau (4), comportant une station (1, 11, 41) pour observer la bande de matériau (4) ;
la station (1, 11, 41) pour observer la bande de matériau (4) comportant un capteur (3, 13) pour observer la bande (4) et au moins un contre-appui (2, 12) pour guider la bande (4), l'au moins un contre-appui (2, 12) se trouvant sur le côté de la bande (4) opposé au capteur (3, 13), des dispositifs étant prévus à l'aide desquels une différence de pression peut être produite et conçue de telle sorte qu'une force résultante agit sur la bande en direction du contre-appui ;
**caractérisée en ce que** :
un premier dispositif disposé sur le côté de la bande orienté vers le capteur appelle une surpression, ce dispositif comprenant des buses d'air comprimé (6, 7) parmi lesquelles une première buse d'air comprimé (6) agit sur la bande (4) avant le contre-appui (2, 12) et une deuxième buse d'air comprimé (7) agit sur la bande (4) derrière le contre-appui (2, 12) ;
et/ou un deuxième dispositif disposé sur le côté de la bande opposé au capteur appelle une sous-pression, ce deuxième dispositif comprenant des buses (53) hors desquelles sont guidés des courants d'air sous surpression orientées transversalement à la direction de transport (z) de la bande (4), les buses (53) étant disposées dans la direction de transport de la bande (4), vues devant et derrière le contre-appui (2, 12).

2. Machine selon la revendication 1, **caractérisée en ce que** le premier dispositif est un dispositif de mise à disposition d'un air soufflé comportant des buses (6, 7) extrudant l'air soufflé sur le côté de la bande de matériau (4) orienté vers le capteur (3, 13) dans la région de la station (1, 11, 41) pour observer la bande de matériau (4).

3. Machine selon l'une quelconque des revendications précédentes, **caractérisée en ce que** le deuxiéme dispositif comprend également un dispositif comprenant des buses pour la mise à disposition d'air soufflé, l'air soufflé mis à disposition présentant une vitesse d'écoulement supérieure à la vitesse de transport de la bande (4).

4. Machine selon la revendication précédente, **caractérisée en ce que** les buses sont disposées dans des directions s'étendant transversalement à la direction de transport (z), de sorte que l'air soufflé prend une direction d'écoulement s'étendant pour l'essentiel transversalement à la direction de transport de la bande,

5. Machine selon la revendication précédente, **caractérisée en ce que** les buses sont disposées dans des canaux disposés transversalement à la direction de transport de la bande dans le contre-appui.

6. Machine selon la revendication précédente, **caractérisée en ce que** les buses sont disposées de façon centrale dans les canaux et appellent les flux orientés en direction des côtés du contre-appui.

7. Machine selon la revendication 1, **caractérisée en ce que** la surface, orientée vers la bande (4), du contre-appui (2, 12) est réalisée de façon plane dans la région de la station (1, 11, 41).

8. Machine selon l'une quelconque des revendications précédentes, **caractérisée en ce que** la surface, orientée vers la bande, du contre-appui est blanchie dans la région de la station (1, 11, 41).

9. Machine selon l'une quelconque des revendications précédentes, **caractérisée en ce que** la surface, orientée vers la bande (4), du contre-appui (2, 12, 32) se compose d'un matériau homogène lisse dans la région de la station (1, 11, 41).

10. Machine selon l'une quelconque des revendications précédentes, **caractérisée en ce que** la surface, orientée vers la bande, du contre-appui (2, 12, 32) contient du téflon dans la région de la station (1, 11, 41).

11. Machine selon l'une quelconque des revendications précédentes, **caractérisée en ce que** la surface, orientée vers la bande, du contre-appui (2, 12, 32) contient du téflon microporeux dans la région de la station (1, 11, 41).

12. Machine selon l'une quelconque des revendications précédentes, **caractérisée en ce que** le capteur (3, 13) est un capteur spectral.

13. Machine selon l'une quelconque des revendications précédentes, **caractérisée par** la présence d'un dispositif de déplacement permettant de déplacer la surface, orientée vers la bande, du contre-appui (2, 12, 32) dans la région de la station (1, 11, 41), transversalement (x) à la direction d'avancée (z) de la bande (4).

14. Machine selon l'une quelconque des revendications précédentes ;
**caractérisée en ce que** :
- dans la station (1, 11, 41) servant à observer la bande de matériau (4), au moins un deuxième capteur (12) est prévu à l'aide duquel le côté de la bande de matériau (4) orienté vers ce deuxième capteur (12) peut être observé ;
au moins un deuxième contre-appui (12, 32, 22) peut être positionné par rapport à ce capteur (12) sur le côté de la bande de matériau (4) opposé à l'au moins un deuxième capteur (12) ; et
ce contre-appui supplémentaire, un rouleau (22) blanc et/ou un contre-appui (32) arrêté est équipé d'un élément optique - de préférence un rétro-éclairage (39) ou un miroir (34).

15. Machine selon la revendication précédente, **caractérisée en ce que** le contre-appui (32) arrêté peut être au choix placé contre la bande de matériau (4) et en être retiré.

16. Machine selon la revendication précédente, **caractérisée en ce que** la surface, orientée vers la bande de matériau (4), du contre-appui (32) arrêté se compose, dans la direction d'avancée de bande (z) devant et/ou derrière l'élément optique (34, 39), d'un matériau poreux ou troué.

17. Machine selon l'une quelconque des trois revendications précédentes, **caractérisée par** la présence d'au moins deux dispositifs d'éclairage (14, 15) servant à éclairer la région d'observation de l'au moins un deuxième capteur (13).

18. Procédé d'impression de bandes de matériau ; dans lequel une bande de matériau (4) est observée à l'aide d'un capteur (3, 13) dans la région d'une station (1, 11, 41) afin d'observer la bande de matériau (4) depuis son premier côté ;
pendant que la bande est guidée sur son autre côté depuis au moins un contre-appui (2, 12, 22, 32) ;
une différence de pression étant produite avec l'aide de dispositifs, ladite différence exerçant sur la bande (4) une force résultante en direction du contre-appui ; **caractérisé en ce que** :
une surpression est appelée avec un premier dispositif disposé sur le côté de la bande orienté vers le capteur, ce dispositif comprenant des buses d'air comprimé (6, 7) parmi lesquelles une première buse d'air comprimé (6) agit sur la bande (4) avant le contre-appui (2, 12) et une deuxième buse d'air comprimé (7) agit sur la bande (4) derrière le contre-appui (2, 12) ;
et/ou une sous-pression est appelée avec un deuxième dispositif disposé sur le côté de la bande opposé au capteur, ce deuxième dispositif comprenant des buses (S3) appelant des courants d'air sous surpression orientés transversalement à la direction de transport (z) de la bande (4), les buses (53) étant disposées dans la direction de transport de la bande (4), vues devant et derrière le contre-appui (2, 12).

19. Procédé selon la revendication précédente, **caractérisé en ce que** la vitesse et/ou le débit volumique de l'air soufflé est réglé de façon à ce qu'aucun interstice d'air mesurable ne se trouve entre le contre-appui (2, 12, 22, 32) et la bande de matériau (4) .
